(19) Europäisches Patentamt
European Patent Office
Office européen des brevets

(11) **EP 2 368 328 B1**

(12) **FASCICULE DE BREVET EUROPEEN**

(45) Date de publication et mention
de la délivrance du brevet:
**03.09.2014 Bulletin 2014/36**

(21) Numéro de dépôt: **09795509.0**

(22) Date de dépôt: **24.11.2009**

(51) Int Cl.:
*H04B 1/7163* (2011.01)   *H04B 1/719* (2011.01)
*H04B 1/69* (2011.01)

(86) Numéro de dépôt international:
**PCT/FR2009/052274**

(87) Numéro de publication internationale:
**WO 2010/061121 (03.06.2010 Gazette 2010/22)**

(54) **PROCÉDÉ DÉMISSION D'IMPULSIONS DANS UN CANAL DE TRANSMISSION**

VERFAHREN ZUR IMPULSSENDUNG IN EINEM KOMMUNIKATIONSKANAL

METHOD FOR EMITTING PULSES IN A TRANSMISSION CHANNEL

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **28.11.2008 FR 0858123**

(43) Date de publication de la demande:
**28.09.2011 Bulletin 2011/39**

(73) Titulaire: **Orange**
**75015 Paris (FR)**

(72) Inventeurs:
• **DANGER, Jean-Luc**
**F-92160 Antony (FR)**
• **MEKKI, Sami**
**F-94250 Gentilly (FR)**
• **MISCOPEIN, Benoît**
**F-38000 Grenoble (FR)**

(74) Mandataire: **Benetiere, Marion**
**Orange**
**R&D/PIV/Brevets**
**38-40, rue du Général Leclerc**
**92794 Issy-Les-Moulineaux Cedex 09 (FR)**

(56) Documents cités:
**EP-A1- 1 455 461   WO-A1-2007/060749**

**Description**

La présente invention se situe dans le domaine des communications par impulsions notamment des communications Ultra Large Bande (ULB ou UWB pour *Ultra Wide Band en* anglais).

Des communications par impulsions sont utilisées dans des applications impliquant des communications de courte distance à un débit élevé. C'est notamment le cas dans des réseaux personnels sans fil ou WPAN (pour *Wireless Personal Area Network* en anglais), des réseaux de capteurs, des systèmes RFID (pour *Radio Frequency IDentification* en anglais), des applications de détection d'intrusion, etc...

L'utilisation de cette technique de communication par impulsions est appelée à croître si des débits élevés peuvent être atteints pour un coût faible de mise en oeuvre.

Dans le domaine des communications par impulsions, l'information à transmettre est codée sous forme de symboles.

Le signal portant ces symboles n'est pas un signal continu mais se présente sous forme d'impulsions de très courte durée.

Une durée de transmission, appelée temps symbole, est affectée à chaque symbole. La durée de transmission d'un symbole est divisée en intervalles de temps appelés trames (ou *frames* en anglais), individuellement porteuses d'une impulsion. Chaque trame est elle-même divisée en intervalles de temps appelés créneaux (ou *slots* en anglais). Un symbole est donc transmis sous forme d'un ensemble d'impulsions, individuellement émises dans un certain créneau d'une trame du temps symbole.

Un signal de type Ultra Large Bande possède certaines caractéristiques.

La largeur de la bande de fréquence d'un tel signal est grande (au moins 500 MHz). La densité spectrale de puissance moyenne par Hz d'un signal ULB est faible. Par exemple, le régulateur américain FCC (pour *Federal Communications Commission* en anglais) autorise une densité spectrale de puissance moyenne de l'ordre de -41,3 dBm/Hz pour un signal compris entre 3,1 et 10,6 GHz.

Il existe plusieurs méthodes pour générer et transmettre un signal à haut débit se présentant sous forme d'impulsions, de type Ultra Large Bande.

Parmi ces méthodes, on peut citer la modulation "tout ou rien" qui consiste à représenter un symbole par l'absence ou la présence d'impulsion ou la modulation de phase qui consiste à représenter un symbole par une impulsion ou son inverse. La modulation peut aussi être de type M-PPM (pour *M-ary Pulse Position Modulation* en anglais) qui consiste à appliquer un décalage temporel à l'instant d'émission des impulsions en fonction de la valeur du symbole.

Les communications par impulsions permettent d'obtenir des débits relativement élevés (de l'ordre de 480 Mb/s) mais nécessitent une architecture complexe et donc coûteuse, notamment au niveau de la réception.

La complexité de l'architecture et son coût peuvent être réduits en utilisant un récepteur Ultra Large Bande à détection d'énergie mais un tel récepteur n'est pas adapté pour des débits élevés. En effet, pour un débit élevé, en plus de l'énergie du bruit, il est nécessaire de tenir compte de nombreuses interférences énergétiques entre symboles dues au canal de transmission. La dégradation des performances dues à ces interférences peut être atténuée si le récepteur ULB est muni d'un égaliseur, notamment d'un égaliseur probabiliste. Pour cela, l'égaliseur probabiliste tient compte de la répartition de l'énergie reçue au niveau des créneaux d'un temps symbole.

Un tel égaliseur probabiliste est présenté par S. Mekki et al. dans le document intitulé "Probabilistic equalizer for ultra-wideband energy détection", IEEE 67th Vehicular Technology Conference (VTC), pp. 1108-1112, mai 2008. Cet égaliseur considère toutes les combinaisons possibles des interférences qui peuvent exister pour un nombre fini de symboles. Cette solution nécessite que les paramètres du canal de transmission soient disponibles au niveau du récepteur pour effectuer l'égalisation.

Dans le document intitulé *"*EM channel estimation in a low-cost uwb receiver based on energy detection', IEEE International Symposium on Wireless Communication Systems 2008 (ISWCS 08), 2008, S. Mekki et al. proposent une solution pour estimer les paramètres du canal de transmission au niveau du récepteur à partir de l'information reçue. Cette solution repose sur l'utilisation de l'algorithme EM (pour *Expectation Maximization* en anglais) appliqué au domaine des énergies. L'algorithme EM présente l'inconvénient d'être complexe au niveau combinatoire. Les itérations nécessaires pour estimer les paramètres du canal introduisent également un temps de latence néfaste pour l'efficacité du système.

Le document WO2007/060749 décrit une séquence d'impulsions dans laquelle le préambule est émis une première fois, puis réémis en superposition avec les données utiles.

Le document EP 1455 461 décrit l'émission d'une super trame par un équipement coordinateur d'un réseau WPAN, ladite super trame comprenant une première séquence d'apprentissage destinée à la synchronisation de l'équipement récepteur au coordinateur et une deuxième séquence d'apprentissage destinée à permettre à l'équipement récepteur de se synchroniser finement avec un autre équipement du réseau.

Un des buts de l'invention est de remédier aux insuffisances précitées de l'état de la technique.

Ainsi, la présente invention concerne, selon un premier aspect, un procédé d'émission d'impulsions d'un dispositif d'émission vers un dispositif de réception dans un canal de transmission, selon la revendication 1.

Le procédé selon l'invention repose sur la transmission d'une séquence d'apprentissage indépendante et pour partie différente de l'Information utile et donc ne perturbant pas la transmission de l'information utile. La séquence d'apprentissage se différenciant de l'information utile, un ensemble d'opérations peuvent être réalisées grâce à cette séquence d'apprentissage.

La première partie de la séquence d'apprentissage étant porteuse d'une grande énergie, elle est facilement détectable par un dispositif de réception. Cette première partie peut comporter plusieurs impulsions, chacune étant très énergétique.

La deuxième partie de la séquence d'apprentissage est similaire à de l''information utile.

Le nombre de créneaux séparant l'émission de la au moins une impulsion de la première partie de la séquence d'apprentissage de l'émission d'une impulsion suivante est tel qu'aucune interférence n'est générée entre les symboles correspondants.

L'émission de l'impulsion ou des impulsions de la première partie de la séquence d'apprentissage est telle qu'aucune interférence n'est générée entre symboles correspondants, permettant ainsi un traitement de cette séquence sans interférence.

La deuxième partie de la séquence d'apprentissage est connue à l'avance, similaire à de l'information utile et génère des interférences entre symboles.

La deuxième partie de la séquence d'apprentissage étant similaire à une information utile, le dispositif de réception se retrouve pour le traitement de cette partie de la séquence d'apprentissage dans une configuration similaire au fonctionnement normal, voire dans une configuration plus complexe et donc plus riche du fait du nombre d'interférences générées.

Selon un autre aspect, l'invention concerne un procédé d'estimation des paramètres d'un canal de transmission supportant des impulsions émises d'un dispositif d'émission vers un dispositif de réception, selon la revendication 2.

La séquence d'apprentissage comportant deux parties différentes l'une de l'autre, il est possible d'effectuer des traitements différents en fonction de la partie de la séquence d'apprentissage considérée.

Selon une caractéristique préférée, à la réception de la première partie de la séquence d'apprentissage, une estimation d'un nombre de symboles pouvant interférer est effectuée.

La première partie de la séquence d'apprentissage étant très énergétique, le dispositif de réception peut aisément observer la réponse impulsionnelle du canal et en déduire le nombre de symboles qui peuvent interférer.

Selon une caractéristique préférée, à la réception de la première partie de la séquence d'apprentissage, une première estimation de coefficients d'énergie est réalisée.

La première partie de la séquence d'apprentissage étant très énergétique et ne générant pas d'interférence, elle permet d'obtenir une première estimation de coefficients d'énergie utilisable dans une transmission fortement bruitée.

La première partie de la séquence d'apprentissage peut comporter plusieurs impulsions de façon à améliorer les résultats de l'estimation réalisée.

Selon une caractéristique préférée, à la réception de la deuxième partie de la séquence d'apprentissage, une première estimation d'un niveau énergétique du bruit du canal de transmission est effectuée.

La connaissance du bruit permet ainsi de distinguer le bruit par rapport à l'information utile dans le signal.

Selon une caractéristique préférée, à la réception de la deuxième partie de la séquence d'apprentissage, une seconde estimation de coefficients d'énergie est réalisée.

La première estimation de coefficients d'énergie effectuée à la réception de la première partie de la séquence d'apprentissage complétée par la connaissance du bruit permet d'effectuer une estimation fine des coefficients d'énergie à la réception de la deuxième partie de la séquence d'apprentissage.

Par rapport à un algorithme comme l'algorithme EM, l'utilisation d'une séquence d'apprentissage permet de générer une estimation des coefficients d'énergie suffisante pour de nombreuses applications, avec des niveaux de complexité et de latence moindres.

La première partie de la séquence d'apprentissage étant très énergétique, la synchronisation entre l'émetteur et le récepteur est grandement facilitée. L'utilisation d'un dispositif de réception avec un gain en amplification faible permet d'une part de garantir une faible consommation du dispositif de réception en phase d'attente d'un message et d'autre part de se prémunir de fausses synchronisations engendrées par du bruit. La première partie de la séquence d'apprentissage peut comporter plusieurs impulsions de façon à diminuer encore la probabilité de fausse synchronisation.

L'invention concerne également un dispositif d'émission d'impulsions dans un canal de transmission, selon la revendication 7.

L'invention concerne aussi un terminal apte à recevoir un dispositif d'émission tel que décrit précédemment.

L'invention concerne en outre un dispositif de réception d'impulsions muni d'un égaliseur probabiliste dans un canal de transmission, selon les revendications 9 et 10.

L'invention concerne aussi un terminal apte à recevoir un dispositif de réception tel que décrit précédemment.

L'invention concerne également un programme d'ordinateur comportant des instructions pour mettre en oeuvre un procédé d'estimation des paramètres d'un canal de transmission tel que décrit ci-dessus lorsque le procédé est exécuté par un ordinateur.

D'autres caractéristiques et avantages de l'invention apparaîtront à la lecture de modes de réalisation préférés d'un procédé d'émission d'impulsions dans un canal de transmission, décrits en référence aux figures annexées sur lesquelles :

- la figure 1 représente un procédé d'émission d'impulsions dans un canal de transmission,
- les figures 2a et 2b représentent une séquence d'apprentissage selon l'invention respectivement à l'émission et à la réception,
- les figures 3a, 3b, 3c, 3d et 3e illustrent les interférences générées entre symboles portés par un signal se présentant sous forme d'impulsions transmis à haut débit dans un canal de transmission,
- la figure 4 représente un procédé d'estimation des paramètres d'un canal de transmission de signaux se présentant sous forme d'impulsions,
- la figure 5 représente un dispositif d'émission et un dispositif de réception,
- les figures 6, 7 et 8 illustrent les résultats d'une simulation de la qualité d'un procédé tel que représenté à la figure 4.

Un canal de transmission supportant des communications par impulsions de courte distance à haut débit de type Ultra Large Bande est un canal dispersif, c'est-à-dire qu'un même signal emprunte plusieurs trajets différents entre un dispositif d'émission et un dispositif de réception.

La propagation d'un signal dans un canal Ultra Large Bande fait l'objet de nombreuses modélisations. Parmi celles-ci, on relève la modélisation de la norme IEEE 802.15.3a qui est décrite dans le document de J. Foerster intitulé "Channel modeling sub-committee report final," IEEE P802.15-02/368r5-SG3a, Tech. Rep., 18 novembre 2002. Dans ce modèle, on distingue quatre types de canaux : CM1 (le moins dispersif), CM2, CM3 et CM4 (le plus dispersif).

Cette modélisation est utilisée ci-après pour illustrer la description de modes de réalisation d'un procédé d'émission d'impulsions dans un canal de transmission selon l'invention et ne peut pas être considérée comme limitative de l'invention.

Dans la description qui suit, on considère la transmission à travers un canal bruité d'un signal se présentant sous forme d'impulsions, de type Ultra Large Bande.

La méthode utilisée pour générer et transmettre ce signal est une modulation de type M-PPM, ce qui correspond à la transmission d'une impulsion tous les M créneaux d'un temps symbole. Un symbole correspond à une information de $\log_2(M)$ bits.

Dans la suite de la description, on considère qu'un temps symbole comporte une trame porteuse d'une impulsion. En variante, l'invention peut également s'appliquer à un temps symbole comportant plusieurs trames.

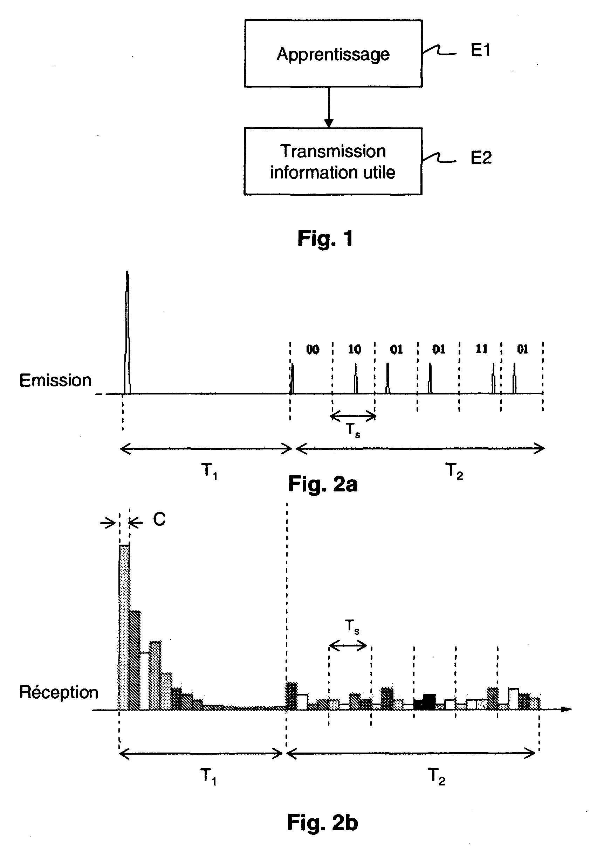

La figure 1 représente un procédé d'émission d'impulsions dans un canal de transmission.

Le procédé comporte une étape E1 d'apprentissage.

Cette étape E1 d'apprentissage est réalisée préalablement à la transmission d'information utile représentée par l'étape E2.

Au cours de l'étape E1 d'apprentissage, une information particulière encore appelée séquence d'apprentissage est émise par un dispositif d'émission vers un dispositif de réception muni d'un égaliseur probabiliste via le canal de transmission considéré.

La séquence d'apprentissage est connue du dispositif de réception.

La séquence d'apprentissage comporte deux parties $T_1$ et $T_2$.

La première partie $T_1$ de la séquence d'apprentissage se présente sous forme d'au moins une impulsion très énergétique.

L'énergie émise dans cette partie $T_1$ de la séquence d'apprentissage satisfait la contrainte d'énergie moyenne maximale que doit respecter un signal ULB.

A l'émission, l'énergie de cette impulsion est supérieure à l'énergie de l'impulsion portant l'information utile.

La modulation M-PPM utilisée pour générer cette impulsion est telle que M est grand. Ainsi, le temps symbole est composé d'un grand nombre de créneaux. Le nombre de créneaux séparant l'émission de cette impulsion de l'émission d'une impulsion suivante est tel qu'aucune interférence n'est générée entre les symboles correspondants.

En variante, la première partie $T_1$ de la séquence d'apprentissage comporte plusieurs impulsions, chacune étant très énergétique. Le nombre de créneaux séparant l'émission de deux impulsions est tel qu'aucune interférence n'est générée entre les symboles correspondants, y compris pour la dernière impulsion émise au titre de la première partie $T_1$ de la séquence d'apprentissage.

La deuxième partie $T_2$ de la séquence d'apprentissage se présente sous forme d'une succession d'impulsions connues à l'avance et semblables à celles utilisées pour porter l'information utile.

A l'émission, l'énergie de chacune de ces impulsions est équivalente à l'énergie de l'information utile.

La modulation M-PPM utilisée pour générer l'ensemble d'impulsions de la deuxième partie $T_2$ de la séquence

d'apprentissage présente un M inférieur au M de la modulation M-PPM utilisée pour générer la (ou les) impulsion(s) de la première partie $T_1$ de la séquence d'apprentissage, permettant ainsi de générer des interférences entre symboles.

Pour cette partie $T_2$ de la séquence d'apprentissage, le nombre d'impulsions et par conséquent le nombre de symboles correspondants sont tels qu'un grand nombre d'interférences sont générées.

La connaissance par le dispositif de réception de cette séquence d'apprentissage permet à ce dernier d'estimer les différents cas possibles d'interférences entre symboles.

La figure 2a et la figure 2b représentent une séquence d'apprentissage telle que décrite ci-dessus respectivement à l'émission et à la réception.

La figure 2a représente une impulsion très énergétique émise au titre de la première partie $T_1$ de la séquence d'apprentissage et une succession d'impulsions d'énergie inférieure à la précédente au titre de la deuxième partie $T_2$ de la séquence d'apprentissage.

La figure 2b représente les énergies reçues au niveau des créneaux C pour chacune des deux parties $T_1$ et $T_2$ de la séquence d'apprentissage.

Comme mentionné dans la présentation de l'état de l'art, la transmission d'un signal à un débit élevé (de l'ordre de quelques dizaines de MHz par exemple) à travers un canal dispersif (par exemple un canal de type CM4) génère un grand nombre d'interférences entre symboles.

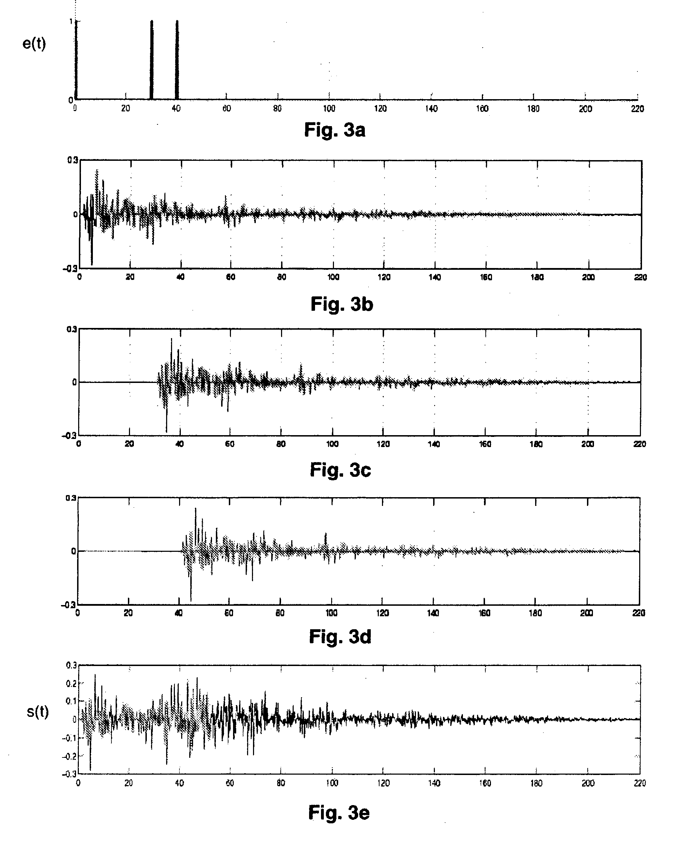

A titre d'exemple, les figures 3a, 3b, 3c, 3d et 3e illustrent les interférences générées entre symboles portés par un signal se présentant sous forme d'impulsions transmis à haut débit (100 Mbit/s) dans un canal de transmission.

La figure 3a représente le signal émis e(t) sous forme d'impulsions correspondant aux symboles 00, 10 et 00.

Les figures 3b, 3c et 3d représentent respectivement la réponse impulsionnelle d'un canal CM4 pour les symboles 00, 10 et 00.

La figure 3e représente le signal reçu s(t). Ce signal correspond à la somme des réponses impulsionnelles du canal.

Le signal reçu effectif comprend aussi du bruit qui est généralement considéré comme un bruit blanc gaussien.

A 100 Mb/s, le temps symbole pour une modulation 4-PPM est de 20 ns (nanosecondes), la durée d'un créneau est de 5 ns et le temps d'étalement de la réponse impulsionnelle du canal de type CM4 est de 160 ns.

Ces durées sont telles que des interférences sont générées entre symboles, ce qui est illustré à la figure 3e par le signal reçu s(t).

Comme mentionné plus haut, pour palier cet inconvénient, l'utilisation d'un dispositif de réception muni d'un égaliseur probabiliste est nécessaire.

Un dispositif de réception ne peut pas gérer un nombre infini de symboles qui interfèrent. On considère qu'un dispositif de réception gère K symboles qui interfèrent. Pour une modulation M-PPM, le nombre P de créneaux pouvant être concernés par des interférences entre symboles est défini par :

$$P = M * (K - 1) + 1$$

avec :

- M correspondant au type de modulation M-PPM considéré et pouvant être égal à 2, 4, etc.,
- K correspondant au nombre de symboles qui interfèrent.

On convient d'appeler créneaux interférents, les créneaux pouvant être concernés par des interférences entre symboles.

Le nombre P correspond également au nombre maximum de créneaux potentiellement interférents pris en compte par l'égaliseur.

L'utilisation d'un égaliseur probabiliste nécessite une connaissance ou une estimation des paramètres du canal.

Parmi ces paramètres figurent notamment le nombre de symboles qui peuvent interférer, la densité spectrale de puissance du bruit et les énergies résultant de tous les cas de figure possibles d'interférences entre symboles.

A la réception de chacune des deux parties $T_1$ et $T_2$ de la séquence d'apprentissage, le dispositif de réception peut réaliser certaines opérations et estimer les paramètres du canal de transmission.

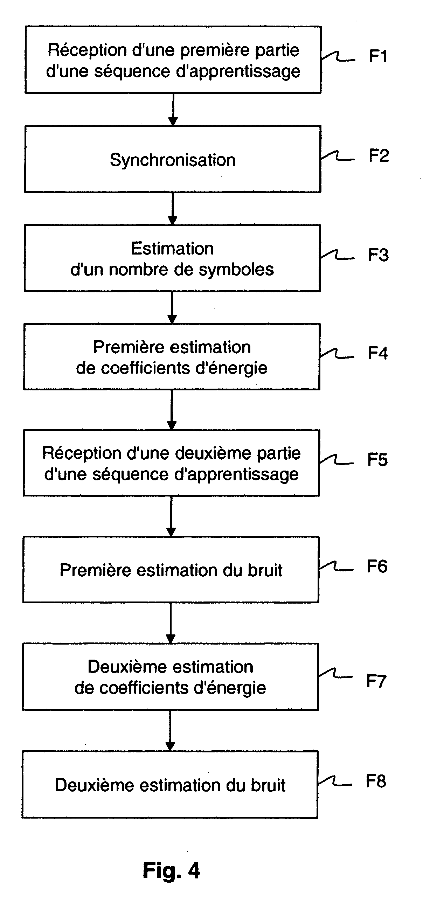

La figure 4 représente un procédé d'estimation des paramètres d'un canal de transmission de signaux se présentant sous forme d'impulsions.

L'étape F1 de ce procédé est une étape de réception de la première partie $T_1$ de la séquence d'apprentissage telle que décrite précédemment.

L'étape F2 est une étape de synchronisation.

L'amplificateur d'un dispositif de réception règle son niveau d'amplification en fonction du signal reçu.

Le gain en amplification est faible lorsque le dispositif de réception est en phase d'attente d'un message. C'est ce cas de figure qui se présente à la réception de la première partie $T_1$ de la séquence d'apprentissage.

Le gain en amplification est élevé lorsque le dispositif de réception est en phase de réception d'un message. C'est par exemple le cas lors de la réception de la deuxième partie $T_2$ de la séquence d'apprentissage ou au cours de l'étape E2 de réception de l'information utile.

A réception de la première partie $T_1$ de la séquence d'apprentissage, le dispositif de réception peut réaliser une opération de synchronisation avec le dispositif d'émission.

Une attente de synchronisation correspond à une attente de message et le gain en amplification est faible pour détecter le bruit. L'impulsion de la première partie $T_1$ de la séquence d'apprentissage étant très énergétique, elle est facilement détectable et l'opération de synchronisation est grandement facilitée.

L'étape F3 est une estimation du nombre de symboles qui peuvent interférer.

La profondeur P du canal exprimée en nombre de créneaux peut être mesurée par le dispositif de réception.

Connaissant la longueur d'un créneau et observant l'étalement de la réponse impulsionnelle du canal, le dispositif de réception en déduit la profondeur P du canal.

Le dispositif de réception peut alors en déduire le nombre K de symboles qui peuvent interférer.

Le dispositif de réception connaît la durée d'un créneau et la durée d'un temps symbole égale à M fois la durée d'un créneau. Par ailleurs, il connaît la profondeur P du canal, il peut donc déduire le nombre K de symboles qui peuvent interférer à partir de la formule identifiée précédemment :

$$P = M * (K - 1) + 1.$$

L'impulsion (ou les quelques impulsions) de la première partie $T_1$ étant très énergétique(s), le dispositif de réception détecte aisément toute la réponse impulsionnelle du canal et donc les mesures ci-dessus sont grandement facilitées.

L'étape suivante F4 est une première estimation de coefficients d'énergie.

Pour respecter l'énergie moyenne par Hertz d'un signal ULB, les impulsions de la séquence d'apprentissage sont largement espacées.

La première partie $T_1$ de la séquence d'apprentissage comportant une impulsion ou quelques impulsions espacées, il n'y a pas d'interférence générée entre les symboles correspondants. Il est donc possible d'estimer le coefficient d'énergie $\beta_i$ du signal au niveau d'un créneau i donné.

Cette estimation se déduit directement de la valeur de l'énergie donnée par le convertisseur analogique / numérique du dispositif de réception.

Ainsi, on a :

$$\beta_i = \varepsilon_i$$

où

- $\varepsilon_i$ est l'énergie reçue au $i^{\text{ème}}$ créneau.

A ce stade, il est également possible d'effectuer une première estimation des coefficients d'énergie du signal pour deux symboles qui interfèrent à partir des coefficients d'énergie $\beta_i$ obtenus sans interférence.

Si on considère deux créneaux i et j concernés par l'interférence entre deux symboles, le coefficient d'énergie correspondant est donné par :

$$\beta_{ij} = \beta_i + \beta_j + \text{erreur}.$$

Le tableau qui suit représente les combinaisons pour deux symboles ($x_n$, $x_{n-1}$) qui interfèrent (c'est-à-dire pour K = 2) en 4-PPM. Le symbole résultant est une suite de 4 coefficients d'énergie $\beta_{ij}$. Il existe donc 64 valeurs de $\beta_{ij}$ pour les 16 combinaisons possibles, mais seulement 15 niveaux d'interférences $\beta_{ij}$ sont différents.

| | $X_n$ | | | | | | | | | | | | | | | |
|---|---|---|---|---|---|---|---|---|---|---|---|---|---|---|---|---|
| | 00 | | | | 01 | | | | 10 | | | | 11 | | | |
| $X_{n-1}$ | 1 | 0 | 0 | 0 | 0 | 1 | 0 | 0 | 0 | 0 | 1 | 0 | 0 | 0 | 0 | 1 |
| 00 | $\beta_{04}$ | $\beta_1$ | $\beta_2$ | $\beta_3$ | $\beta_4$ | $\beta_0$ | $\beta_1$ | $\beta_2$ | $\beta_4$ | 0 | $\beta_0$ | $\beta_1$ | $\beta_4$ | 0 | 0 | $\beta_0$ |

(suite)

| | $X_n$ | | | | | | | | | | | | | | | |
| --- | --- | --- | --- | --- | --- | --- | --- | --- | --- | --- | --- | --- | --- | --- | --- | --- |
| | 00 | | | | 01 | | | | 10 | | | | 11 | | | |
| 01 | $\beta_{03}$ | $\beta_{14}$ | $\beta_2$ | $\beta_3$ | $\beta_3$ | $\beta_{04}$ | $\beta_1$ | $\beta_2$ | $\beta_3$ | $\beta_4$ | $\beta_0$ | $\beta_1$ | $\beta_3$ | $\beta_4$ | 0 | $\beta_0$ |
| 10 | $\beta_{02}$ | $\beta_{13}$ | $\beta_{24}$ | $\beta_3$ | $\beta_2$ | $\beta_{03}$ | $\beta_{14}$ | $\beta_2$ | $\beta_2$ | $\beta_3$ | $\beta_{04}$ | $\beta_1$ | $\beta_2$ | $\beta_3$ | $\beta_4$ | $\beta_0$ |
| 11 | $\beta_{01}$ | $\beta_{12}$ | $\beta_{23}$ | $\beta_{34}$ | $\beta_1$ | $\beta_{02}$ | $\beta_{13}$ | $\beta_{24}$ | $\beta_1$ | $\beta_2$ | $\beta_{03}$ | $\beta_{14}$ | $\beta_1$ | $\beta_2$ | $\beta_3$ | $\beta_{04}$ |

Le nombre de coefficients d'énergie sans interférence et avec interférences à estimer dépend du nombre K de symboles qui peuvent interférer ou du nombre P de créneaux correspondants.

A titre d'exemples :

- pour K égal à 2 (ou P égal à 5), il y a 15 coefficients d'énergie à estimer,
- pour K égal à 3 (ou P égal à 9), il y a 88 coefficients d'énergie à estimer,
- pour K égal à 4 (ou P égal à 13), il y a 424 coefficients d'énergie à estimer.

L'étape F5 du procédé d'estimation des paramètres d'un canal de transmission selon l'invention est une étape de réception de la deuxième partie $T_2$ de la séquence d'apprentissage telle que décrite plus haut.

A la réception de la deuxième partie $T_2$ de la séquence d'apprentissage, le dispositif de réception peut réaliser de nouvelles opérations ou de nouvelles estimations et affiner les estimations réalisées à la réception de la première partie $T_1$ de la séquence d'apprentissage.

Ainsi, l'étape F6 est une première estimation du bruit.

A la réception de la deuxième partie $T_2$ de la séquence d'apprentissage, une première estimation d'un niveau énergétique du bruit du canal de transmission est réalisée.

Le bruit étant considéré comme un bruit blanc gaussien, cela revient à estimer la variance du bruit.

L'estimation de la variance $\sigma^2$ du bruit est réalisée à partir des coefficients d'énergie $\beta_{ij}$ du signal, estimés à la réception de la première partie $T_1$ de la séquence d'apprentissage.

Une première estimation de la variance du bruit est donnée par :

$$\sigma^2 = \frac{1}{(2L * M * N)} \sum_{n=1}^{N} \sum_{m=1}^{M} \sum_{\beta_{ij}} g(\varepsilon_{nm}, \beta_{ij}) p(B_{nm} = \beta_{ij})$$

où

- 2L est le degré de liberté du signal transmis avec 2L = 2 * Ts * B où Ts est la durée d'un créneau et B la largeur de la bande de fréquence du signal ULB,
- M est le nombre de créneaux par temps symbole,
- N est le nombre de symboles transmis dans la deuxième partie $T_2$ de la séquence d'apprentissage,
- $\varepsilon_{nm}$ est l'énergie reçue dans le créneau m du symbole n,
- $\beta_{nm}$ est le coefficient d'énergie avec interférences correspondant au créneau m du symbole n,
-

$$- \; g(\varepsilon_{nm}, \beta_{ij}) = \begin{cases} \varepsilon_{nm} - \beta_{ij} & \text{si } \varepsilon_{nm} > \beta_{ij} \\ 0 & \text{si } \varepsilon_{nm} \le \beta_{ij} \end{cases},$$

- $p(B_{nm} = \beta_{ij}) = 1$ si $B_{nm} = \beta_{ij}$ et $p(B_{nm} = \beta_{ij}) = 0$ sinon.

L'étape suivante F7 est une deuxième estimation de coefficients d'énergie.

Une deuxième estimation des coefficients d'énergie avec interférences $\beta'_{ij}$ peut être réalisée à partir de la première estimation effectuée à la réception de la première partie $T_1$ de la séquence d'apprentissage et à partir de la première estimation de la variance du bruit.

Cette deuxième estimation des coefficients d'énergie avec interférences est donnée par :

$$\beta'_{ij} \approx \left( \frac{\sum\limits_{n=1}^{N} \sum\limits_{m=1}^{M} \sqrt{f\left(\varepsilon_{nm}, 2L\sigma^2\right)} * p\left(B_{nm} = \beta_{ij}\right)}{\sum\limits_{n=1}^{N} \sum\limits_{m=1}^{M} p\left(B_{nm} = \beta_{ij}\right)} \right)^2$$

où

- 2L est le degré de liberté du signal transmis avec 2L = 2 * Ts * B où Ts est la durée d'un créneau et B la largeur de la bande de fréquence du signal ULB,
- M est le nombre de créneaux par temps symbole,
- N est le nombre de symboles transmis dans la deuxième partie $T_2$ de la séquence d'apprentissage,
- $\varepsilon_{nm}$ est l'énergie reçue dans le créneau m du symbole n,
- $\beta_{nm}$ est le coefficient d'énergie avec interférences correspondant au créneau m du symbole n,
- $p(B_{nm} = \beta_{ij})$ =1 si $B_{nm} = \beta_{ij}$ et $p(B_{nm} = \beta_{ij}) = 0$ s in on ,
-

$$- f\left(\varepsilon_{nm}, 2L\sigma^2\right) = \begin{cases} \varepsilon_{nm} - 2L\sigma^2 & \text{si } \varepsilon_{nm} > 2L\sigma^2 \\ 0 & \text{si } \varepsilon_{nm} \leq 2L\sigma^2 \end{cases}.$$

L'étape suivante F8 est une deuxième estimation du bruit.

Une deuxième estimation de la variance $\sigma^{2'}$ du bruit est réalisée à partir de la deuxième estimation des coefficients d'énergie avec interférences $\beta'_{ij}$.

Cette deuxième estimation $\sigma^{2'}$ est obtenu en remplaçant $\beta_{ij}$ par $\beta'_{ij}$ dans l'équation de la variance du bruit donnée ci-dessus.

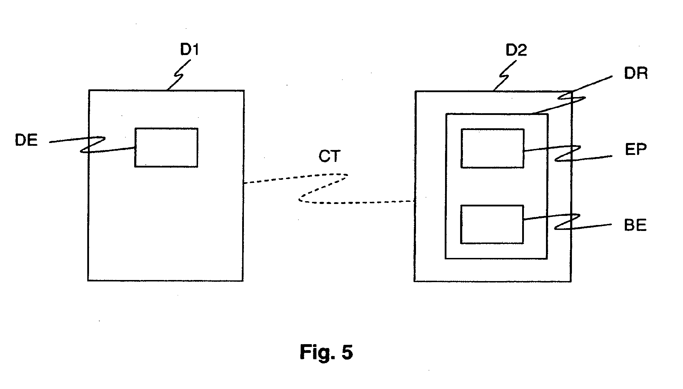

La figure 5 représente un dispositif d'émission et un dispositif de réception.

Le dispositif d'émission DE est inséré dans un terminal D1.

Ce dispositif d'émission DE comporte des moyens lui permettant d'émettre, préalablement à la transmission d'information utile, une séquence d'apprentissage comportant deux parties $T_1$ et $T_2$ et telle que décrite précédemment.

Le dispositif de réception DR est inséré dans un terminal D2.

Le dispositif de réception DR du terminal D2 est muni d'un égaliseur probabiliste EP.

Ce dispositif de réception DR est programmé de telle sorte qu'il sait qu'il va recevoir une séquence d'apprentissage comportant deux parties $T_1$ et $T_2$ telle que décrite précédemment et qu'il en connaît le contenu.

En position d'écoute du canal de transmission CT, le gain en amplification du dispositif de réception DR est faible, de telle sorte qu'il détecte facilement la première partie $T_1$ de la séquence d'apprentissage.

A la réception de la première partie $T_1$ de la séquence d'apprentissage, le dispositif de réception DR du terminal D2 se synchronise avec le dispositif d'émission du terminal D1.

Le dispositif de réception DR du terminal D2 comporte également un bloc d'estimation BE apte à traiter la séquence d'apprentissage comportant deux parties $T_1$ et $T_2$.

A la réception de la première partie $T_1$ de la séquence d'apprentissage, le bloc d'estimation BE effectue une estimation d'un nombre K de symboles pouvant interférer et une première estimation de coefficients d'énergie tel que décrit précédemment dans les étapes F3 et F4.

A la réception de la deuxième partie $T_2$ de la séquence d'apprentissage, le bloc d'estimation BE effectue une première et une deuxième estimation du niveau énergétique du bruit ainsi qu'une deuxième estimation de coefficients d'énergie tel que décrit précédemment respectivement dans les étapes F6, F8 et F7.

Le bloc d'estimation BE peut être composé d'un ou plusieurs modules logiciels formant un programme d'ordinateur. L'invention concerne donc également un programme d'ordinateur comprenant des instructions logicielles pour faire exécuter par le bloc d'estimation BE certaines étapes du procédé d'estimation précédemment décrit.

Les modules logiciels peuvent être stockés dans ou transmis par un support de données. Celui-ci peut être un support matériel de stockage, par exemple un CD-ROM, une disquette magnétique ou un disque dur, ou bien un support transmissible tel qu'un signal électrique, optique ou radio.

Les terminaux D1 et D2 sont des terminaux utilisés pour la mise en oeuvre d'applications nécessitant de transmettre rapidement de l'information à courte distance dans un environnement dispersif. A titre d'exemple, il peut s'agir d'un téléchargement rapide de données à quelques mètres de distance entre un téléphone portable et un ordinateur dans une pièce pouvant être un salon, un bureau ou un laboratoire. Les terminaux D1 et D2 peuvent donc être un téléphone portable, un ordinateur ou encore un téléviseur, etc.

La qualité d'un procédé d'estimation des paramètres d'un canal de transmission avec une séquence d'apprentissage tel que décrit précédemment a été validée par simulation.

La méthode pour exprimer la qualité d'un tel procédé repose sur l'erreur d'estimation des coefficients d'énergie.

Les conditions et les résultats de cette expérience sont fournis ci-après à titre indicatif et ne peuvent pas être considérés comme limitatifs de l'invention.

On considère une première partie $T_1$ d'une séquence d'apprentissage qui comporte une seule impulsion espacée de 128 créneaux d'une deuxième partie $T_2$ de la même séquence d'apprentissage.

On considère des débits de 25, 50 et 100 Mbits/s en modulation 4-PPM pour 4 modèles de canaux ULB dispersifs, de CM1 (le moins dispersif) à CM4 (le plus dispersif).

La largeur de la bande de fréquence du signal ULB considéré est de 3GHz.

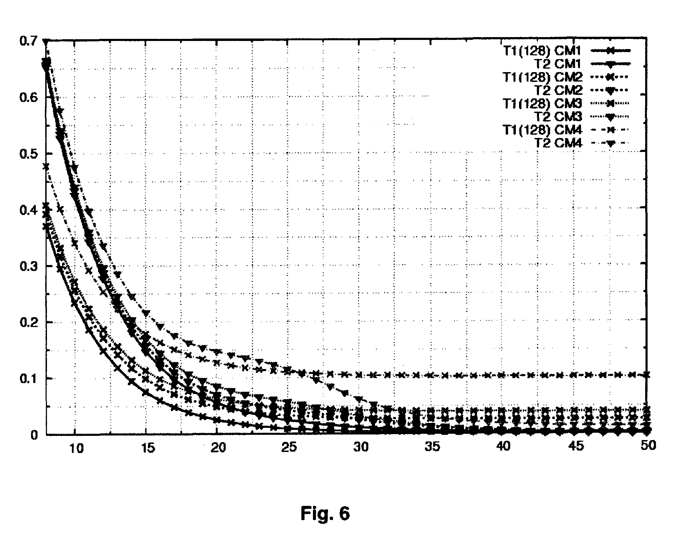

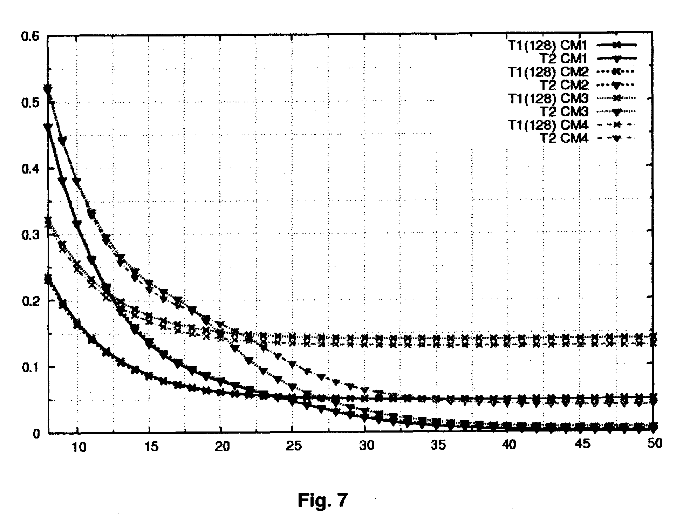

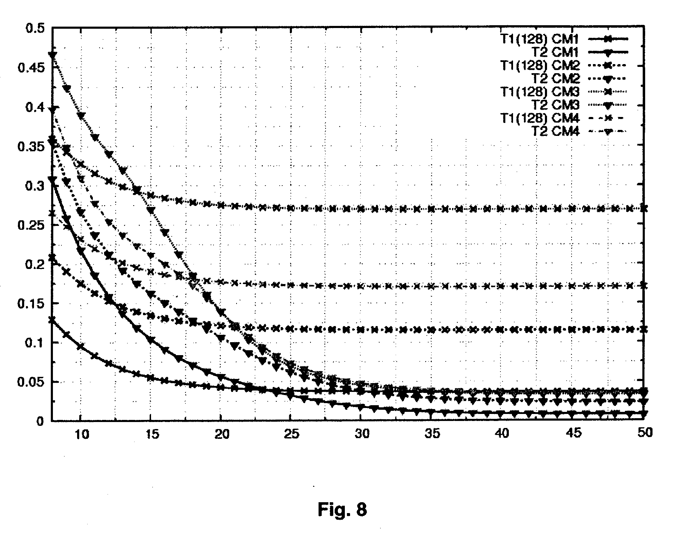

Les **figures 6, 7 et 8** illustrent les résultats d'une simulation de la qualité d'un procédé d'estimation des paramètres d'un canal de transmission tel que décrit précédemment.

Plus particulièrement, les figures 4, 5 et 6 illustrent l'erreur moyenne $E[\beta_{ij}\text{estimé}-\beta_{ij}]$ pour respectivement des débits de 25, 50 et 100 Mbits/s, où E exprime l'espérance mathématique.

L'erreur est exprimée en énergie, sachant que l'énergie d'une impulsion est égale à 1.

Les résultats montrent que l'erreur d'estimation converge vers une valeur très faible pour la deuxième partie $T_2$ de la séquence d'apprentissage, en particulier quand les canaux ne sont pas trop dispersifs.

Pour la première partie $T_1$ de la séquence d'apprentissage la convergence a lieu selon une asymptote expliquée par l'erreur de l'approximation $\beta_{ij} = \beta_i + \beta_j + \text{erreur}$.

Si le rapport signal sur bruit est faible, l'erreur d'estimation des coefficients d'énergie est plus faible pour la première partie $T_1$ de la séquence d'apprentissage que pour la deuxième partie $T_2$ de la séquence d'apprentissage. Si le rapport signal sur bruit est fort c'est le contraire. Ceci permet au dispositif de réception d'estimer les coefficients d'énergie en fonction du niveau de bruit en considérant la première partie $T_1$ ou la deuxième partie $T_2$ ou les deux parties de la séquence d'apprentissage.

Les parties de la séquence d'apprentissage agissent donc d'une façon complémentaire.

## Revendications

1. Procédé d'émission d'impulsions d'un dispositif d'émission vers un dispositif de réception dans un canal de transmission, lesquelles impulsions représentent des symboles d'information et chacune de ces impulsions étant associée à un créneau dans un temps symbole, **caractérisé en ce qu'**il comporte une étape d'apprentissage, réalisée préalablement à la transmission d'information utile et comprenant la transmission d'une séquence d'apprentissage composée de deux parties ($T_1$, $T_2$),

   - la première partie ($T_1$) de la séquence d'apprentissage comportant au moins une impulsion dont l'énergie est supérieure à l'énergie d'une impulsion porteuse d'information utile et le nombre de créneaux séparant l'émission de deux impulsions étant tel qu'aucune interférence n'est générée entre les symboles correspondants ;
   - la deuxième partie ($T_2$) de la séquence d'apprentissage comportant un ensemble d'impulsions connues à l'avance et semblables à celles utilisées pour porter l'information utile, l'énergie de chacune des ces impulsions étant équivalente à l'énergie d'une impulsion porteuse d'information utile et le nombre de créneaux séparant l'émission de deux impulsions étant tel qu'un grand nombre d'interférences est généré.

2. Procédé d'estimation des paramètres d'un canal de transmission supportant des impulsions émises d'un dispositif d'émission vers un dispositif de réception, lesquelles impulsions représentent des symboles d'information et chacune de ces impulsions étant associée à un créneau dans un temps symbole, **caractérisé en ce qu'**il comporte :

   - la réception d'une séquence d'apprentissage, préalablement à la réception d'information utile et composée de deux parties ($T_1$, $T_2$),

      • la première partie ($T_1$) de la séquence d'apprentissage comportant au moins une impulsion dont l'énergie est supérieure à l'énergie d'une impulsion porteuse d'information utile et le nombre de créneaux séparant l'émission de deux impulsions étant tel qu'aucune interférence n'est générée entre les symboles correspondants,
      • la deuxième partie ($T_2$) de la séquence d'apprentissage comportant un ensemble d'impulsions, connues à l'avance et semblables à celles utilisées pour porter l'information utile, l'énergie de chacune des ces impulsions étant équivalente à l'énergie d'une impulsion porteuse d'information utile, et le nombre de créneaux séparant l'émission de deux impulsions étant tel qu'un grand nombre d'interférences est généré,

- le réglage d'un gain d'amplification en fonction du signal reçu, le dispositif de réception ayant un gain d'amplification faible à réception de la première partie et un gain d'amplification élevé à réception de la deuxième partie ;
- à réception de la première partie, une étape de synchronisation entre le dispositif d'émission et le dispositif de réception, ce dernier ayant un gain en amplification faible,
- l'estimation de paramètres du canal de transmission en fonction de la séquence d'apprentissage, une première estimation étant réalisée à la réception de la première partie et une deuxième estimation étant réalisée à la réception de la deuxième partie et à partir de la première estimation.

3. Procédé selon la revendication 2, **caractérisé en ce qu'**il comporte, à la réception de la première partie ($T_1$) de la séquence d'apprentissage, une estimation d'un nombre de symboles pouvant interférer.

4. Procédé selon la revendication 2 ou 3, **caractérisé en ce qu'**il comporte, à la réception de la première partie ($T_1$) de la séquence d'apprentissage, une première estimation de coefficients d'énergie.

5. Procédé selon l'une quelconque des revendications 2 à 4, **caractérisé en ce qu'**il comporte, à la réception de la deuxième partie ($T_2$) de la séquence d'apprentissage, une première estimation d'un niveau énergétique du bruit du canal de transmission.

6. Procédé selon l'une quelconque des revendications 2 à 5, **caractérisé en ce qu'**il comporte, à la réception de la deuxième partie ($T_2$) de la séquence d'apprentissage, une seconde estimation de coefficients d'énergie.

7. Dispositif d'émission (DE) d'impulsions dans un canal de transmission, lesquelles impulsions représentant des symboles d'information et chacune de ces impulsions étant associée à un créneau dans un temps symbole, **caractérisé en ce qu'**il comporte des moyens d'émission d'une séquence d'apprentissage, mis en oeuvre préalablement à la transmission d'information utile, ladite séquence étant composée de deux parties ($T_1$, $T_2$),

- la première partie ($T_1$) de la séquence d'apprentissage comportant au moins une impulsion dont l'énergie est supérieure à l'énergie d'une impulsion porteuse d'information utile et le nombre de créneaux séparant l'émission de deux impulsions étant tel qu'aucune interférence n'est générée entre les symboles correspondants ;
- la deuxième partie ($T_2$) de la séquence d'apprentissage comportant un ensemble d'impulsions connues à l'avance et semblables à celles utilisées pour porter l'information utile, l'énergie de chacune des ces impulsions étant équivalente à l'énergie d'une impulsion porteuse d'information utile et le nombre de créneaux séparant l'émission de deux impulsions étant tel qu'un grand nombre d'interférences est généré.

8. Terminal (D1) comportant un dispositif d'émission tel que décrit à la revendication 7.

9. Dispositif de réception (DR) d'impulsions muni d'un égaliseur probabiliste dans un canal de transmission avec un dispositif d'émission, lesquelles impulsions représentant des symboles d'information et chacune de ces impulsions étant associée à un créneau dans un temps symbole, **caractérisé en ce qu'**il comporte :

- des moyens de réception d'une séquence d'apprentissage composée de deux parties ($T_1$, $T_2$),

• la première partie ($T_1$) de la séquence d'apprentissage comportant au moins une impulsion dont l'énergie est supérieure à l'énergie d'une impulsion porteuse d'information utile et le nombre de créneaux séparant l'émission de deux impulsions étant tel qu'aucune interférence n'est générée entre les symboles correspondants ,
• la deuxième partie ($T_2$) de la séquence d'apprentissage comportant un ensemble d'impulsions, connues à l'avance et semblables à celles utilisées pour porter l'information utile, l'énergie de chacune des ces impulsions étant équivalente à l'énergie d'une impulsion porteuse d'information utile et le nombre de créneaux séparant l'émission de deux impulsions étant tel qu'un grand nombre d'interférences est généré,

lesdits moyens de réception comprenant :

- un amplificateur apte à régler un gain d'amplification en fonction du signal reçu, la première partie étant reçue avec un gain en amplification faible et la deuxième partie avec un gain en amplification élevé,
- des moyens de synchronisation avec le dispositif d'émission à réception de la première partie, le gain en amplification étant faible,

- des moyens d'estimation (BE) de paramètres du canal de transmission en fonction de la séquence d'apprentissage, aptes à réaliser une première estimation à la réception de la première partie et une deuxième estimation à la réception de la deuxième partie et à partir de la première estimation.

10. Dispositif de réception selon la revendication 9, **caractérisé en ce que** les moyens d'estimation (BE) de paramètres du canal de transmission en fonction de la séquence d'apprentissages sont aptes à mettre en oeuvre :

- à la réception de la première partie (T1), une estimation d'un nombre de symboles pouvant interférer;
- une première estimation des coefficients d'énergie à la réception de la première partie;
- une première estimation d'un niveau énergétique du bruit du canal de transmission à la réception de la première partie ;
- une deuxième estimation des coefficients d'énergie à la réception de la deuxième partie et à partir de la première estimation du niveau énergétique du bruit,
- une deuxième estimation d'un niveau énergétique du bruit du canal de transmission à partir de la deuxième estimation des coefficients d'énergie.

11. Terminal (D2) comportant un dispositif de réception selon l'une des revendications 9 ou 10.

12. Programme d'ordinateur comportant des instructions pour mettre en oeuvre le procédé selon l'une quelconque des revendications 2 à 6 lorsque le procédé est exécuté par un ordinateur.

**Patentansprüche**

1. Verfahren zum Senden von Impulsen von einer Sendevorrichtung zu einer Empfangsvorrichtung in einem Übertragungskanal, wobei die Impulse Informationssymbole darstellen und jeder dieser Impulse einem Zeitschlitz in einer Symbolzeit zugeordnet ist, **dadurch gekennzeichnet, dass** es einen Lernschritt aufweist, der vor der Nutzinformationsübertragung durchgeführt wird und die Übertragung einer aus zwei Teilen ($T_1$, $T_2$) bestehenden Lernsequenz enthält,

- wobei der erste Teil ($T_1$) der Lernsequenz mindestens einen Impuls aufweist, dessen Energie größer ist als die Energie eines Nutzinformation-Trägerimpulses, und die Anzahl von das Senden von zwei Impulsen trennenden Zeitschlitzen so ist, dass keine Interferenz zwischen den entsprechenden Symbolen erzeugt wird;
- wobei der zweite Teil ($T_2$) der Lernsequenz eine Einheit von Impulsen aufweist, die vorab bekannt und denjenigen ähnlich sind, die zum Tragen der Nutzinformation verwendet werden, wobei die Energie jedes dieser Impulse gleich der Energie eines Nutzinformation-Trägerimpulses ist, und die Anzahl von das Senden von zwei Impulsen trennenden Zeitschlitzen so ist, dass eine große Anzahl von Interferenzen erzeugt wird.

2. Verfahren zur Schätzung der Parameter eines Übertragungskanals, der Impulse trägt, die von einer Sendevorrichtung zu einer Empfangsvorrichtung gesendet werden, wobei die Impulse Informationssymbole darstellen und jeder dieser Impulse einem Zeitschlitz in einer Symbolzeit zugeordnet ist, **dadurch gekennzeichnet, dass** es aufweist:

- den Empfang einer Lernsequenz vor dem Empfang einer Nutzinformation und aus zwei Teilen ($T_1$, $T_2$) bestehend,

  • wobei der erste Teil ($T_1$) der Lernsequenz mindestens einen Impuls aufweist, dessen Energie größer ist als die Energie eines Nutzinformation-Trägerimpulses, und die Anzahl von das Senden von zwei Impulsen trennenden Zeitschlitzen so ist, dass keine Interferenz zwischen den entsprechenden Symbolen erzeugt wird;
  • wobei der zweite Teil ($T_2$) der Lernsequenz eine Einheit von Impulsen aufweist, die vorab bekannt und denjenigen ähnlich sind, die zum Tragen der Nutzinformation verwendet werden, wobei die Energie jedes dieser Impulse gleich der Energie eines Nutzinformation-Trägerimpulses ist, und die Anzahl von das Senden von zwei Impulsen trennenden Zeitschlitzen so ist, dass eine große Anzahl von Interferenzen erzeugt wird,

- die Regelung einer Verstärkungszunahme abhängig vom empfangenen Signal, wobei die Empfangsvorrichtung eine schwache Verstärkungszunahme beim Empfang des ersten Teils und eine hohe Verstärkungszunahme beim Empfang des zweiten Teils hat;
- beim Empfang des ersten Teils, einen Schritt der Synchronisation zwischen der Sendevorrichtung und der Empfangsvorrichtung, wobei letztere eine schwache Verstärkungszunahme hat,
- die Schätzung von Parametern des Übertragungskanals abhängig von der Lernsequenz, wobei eine erste Schätzung beim Empfang des ersten Teils und eine zweite Schätzung beim Empfang des zweiten Teils und ausgehend von der ersten Schätzung durchgeführt wird.

3. Verfahren nach Anspruch 2, **dadurch gekennzeichnet, dass** es beim Empfang des ersten Teils ($T_1$) der Lernsequenz eine Schätzung einer Anzahl von Symbolen aufweist, die interferieren können.

4. Verfahren nach Anspruch 2 oder 3, **dadurch gekennzeichnet, dass** es beim Empfang des ersten Teils ($T_1$) der Lernsequenz eine erste Schätzung von Energiekoeffizienten aufweist.

5. Verfahren nach einem der Ansprüche 2 bis 4, **dadurch gekennzeichnet, dass** es beim Empfang des zweiten Teils ($T_2$) der Lernsequenz eine erste Schätzung eines Energiepegels des Rauschens des Übertragungskanals aufweist.

6. Verfahren nach einem der Ansprüche 2 bis 5, **dadurch gekennzeichnet, dass** es beim Empfang des zweiten Teils ($T_2$) der Lernsequenz eine zweite Schätzung von Energiekoeffizienten aufweist.

7. Sendevorrichtung (DE) von Impulsen in einem Übertragungskanal, wobei die Impulse Informationssymbole darstellen und jeder dieser Impulse einem Zeitschlitz in einer Symbolzeit zugeordnet ist, **dadurch gekennzeichnet, dass** sie Sendeeinrichtungen einer Lernsequenz aufweist, die vor der Nutzinformationsübertragung eingesetzt werden, wobei die Sequenz aus zwei Teilen ($T_1$, $T_2$) besteht,

- wobei der erste Teil ($T_1$) der Lernsequenz mindestens einen Impuls aufweist, dessen Energie größer ist als die Energie eines Nutzinformation-Trägerimpulses, und die Anzahl von das Senden von zwei Impulsen trennenden Zeitschlitzen so ist, dass keine Interferenz zwischen den entsprechenden Symbolen erzeugt wird;
- wobei der zweite Teil ($T_2$) der Lernsequenz eine Einheit von Impulsen aufweist, die vorab bekannt und denjenigen ähnlich sind, die zum Tragen der Nutzinformation verwendet werden, wobei die Energie jedes dieser Impulse gleich der Energie eines Nutzinformation-Trägerimpulses ist, und die Anzahl von das Senden von zwei Impulsen trennenden Zeitschlitzen so ist, dass eine große Anzahl von Interferenzen erzeugt wird.

8. Endgerät (D1), das eine wie im Anspruch 7 beschriebene Sendevorrichtung aufweist.

9. Empfangsvorrichtung (DR) von Impulsen, die mit einem probabilistischen Entzerrer in einem Übertragungskanal mit einer Sendevorrichtung ausgestattet ist, wobei die Impulse Informationssymbole darstellen und jeder dieser Impulse einem Zeitschlitz in einer Symbolzeit zugeordnet ist, **dadurch gekennzeichnet, dass** sie aufweist:

- Empfangseinrichtungen einer aus zwei Teilen ($T_1$, $T_2$) bestehenden Lernsequenz,

• wobei der erste Teil ($T_1$) der Lernsequenz mindestens einen Impuls aufweist, dessen Energie größer ist als die Energie eines Nutzinformation-Trägerimpulses, und die Anzahl von das Senden von zwei Impulsen trennenden Zeitschlitzen so ist, dass keine Interferenz zwischen den entsprechenden Symbolen erzeugt wird;
• wobei der zweite Teil ($T_2$) der Lernsequenz eine Einheit von Impulsen aufweist, die vorab bekannt und denjenigen ähnlich sind, die zum Tragen der Nutzinformation verwendet werden, wobei die Energie jedes dieser Impulse gleich der Energie eines Nutzinformation-Trägerimpulses ist, und die Anzahl von das Senden von zwei Impulsen trennenden Zeitschlitzen so ist, dass eine große Anzahl von Interferenzen erzeugt wird,

wobei die Empfangseinrichtungen enthalten:

- einen Verstärker, der eine Verstärkungszunahme abhängig vom empfangenen Teil regeln kann, wobei der erste Teil mit einer schwachen Verstärkungszunahme und der zweite Teil mit einer hohen Verstärkungszunahme empfangen wird,
- Einrichtungen zur Synchronisation mit der Sendevorrichtung beim Empfang des ersten Teils, wobei die Verstärkungszunahme schwach ist,
- Einrichtungen (BE) zur Schätzung von Parametern des Übertragungskanals abhängig von der Lernsequenz, die eine erste Schätzung beim Empfang des ersten Teils und eine zweite Schätzung beim Empfang des zweiten Teils und ausgehend von der ersten Schätzung durchführen können.

**10.** Empfangsvorrichtung nach Anspruch 9, **dadurch gekennzeichnet, dass** die Einrichtungen (BE) zur Schätzung von Parametern des Übertragungskanals abhängig von der Lernsequenz einsetzen können:

- beim Empfang des ersten Teils ($T_1$), eine Schätzung einer Anzahl von Symbolen, die interferieren können;
- eine erste Schätzung der Energiekoeffizienten beim Empfang des ersten Teils;
- eine erste Schätzung eines Energiepegels des Rauschens des Übertragungskanals beim Empfang des ersten Teils;
- eine zweite Schätzung der Energiekoeffizienten beim Empfang des zweiten Teils und ausgehend von der ersten Schätzung des Energiepegels des Rauschens,
- eine zweite Schätzung eines Energiepegels des Rauschens des Übertragungskanals ausgehend von der zweiten Schätzung der Energiekoeffizienten.

**11.** Endgerät (D2), das eine Empfangsvorrichtung nach einem der Ansprüche 9 oder 10 aufweist.

**12.** Computerprogramm, das Anweisungen aufweist, um das Verfahren nach einem der Ansprüche 2 bis 6 anzuwenden, wenn das Verfahren von einem Computer ausgeführt wird.

**Claims**

**1.** Method for sending pulses from a sending device to a receiving device in a transmission channel, which pulses representing information symbols and each of these pulses being associated with a slot in a symbol time, **characterized in that** it comprises a training step, carried out prior to the transmission of useful information and comprising the transmission of a training sequence composed of two parts ($T_1$, $T_2$),

- the first part ($T_1$) of the training sequence comprising at least one pulse whose energy is greater than the energy of a pulse carrying useful information and the number of slots separating the sending of two pulses being such that no interference is generated between the corresponding symbols,
- the second part ($T_2$) of the training sequence comprising a set of pulses that are known in advance and are similar to those used to carry the useful information, the energy of each of these pulses being equivalent to the energy of a pulse carrying useful information and the number of slots separating the sending of two pulses being such that a great deal of interference is generated.

**2.** Method for estimating the parameters of a transmission channel supporting pulses sent from a sending device to a receiving device, which pulses representing information symbols and each of these pulses being associated with a slot in a symbol time, **characterized in that** it comprises:

- the receiving of a training sequence, prior to the receiving of useful information and composed of two parts ($T_1$, $T_2$),

  • the first part ($T_1$) of the training sequence comprising at least one pulse whose energy is greater than the energy of a pulse carrying useful information and the number of slots separating the sending of two pulses being such that no interference is generated between the corresponding symbols,
  • the second part ($T_2$) of the training sequence comprising a set of pulses that are known in advance and are similar to those used to carry the useful information, the energy of each of these pulses being equivalent to the energy of a pulse carrying useful information and the number of slots separating the sending of two pulses being such that a great deal of interference is generated,

    - the adjustment of an amplification gain as a function of the signal received, the receiving device having a low amplification gain on receipt of the first part and a high amplification gain on receipt of the second part;
    - on receiving the first part, a step of synchronization between the sending device and the receiving device, the latter having a low amplification gain,
    - the estimation of parameters of the transmission channel as a function of the training sequence, a first estimation being carried out on receipt of the first part and a second estimation being carried out on receipt of the second part and on the basis of the first estimation.

**3.** Method according to Claim 2, **characterized in that** it comprises, on receipt of the first part ($T_1$) of the training

sequence, an estimation of a number of symbols that can interfere.

4. Method according to Claim 2 or 3, **characterized in that** it comprises, on receipt of the first part ($T_1$) of the training sequence, a first estimation of energy coefficients.

5. Method according to any one of Claims 2 to 4, **characterized in that** it comprises, on receipt of the second part ($T_2$) of the training sequence, a first estimation of an energy level of the noise of the transmission channel.

6. Method according to any one of Claims 2 to 5, **characterized in that** it comprises, on receipt of the second part ($T_2$) of the training sequence, a second estimation of energy coefficients.

7. Device (DE) for sending pulses in a transmission channel, which pulses representing information symbols and each of these pulses being associated with a slot in a symbol time, **characterized in that** it comprises means for sending a training sequence, implemented prior to the transmission of useful information, said sequence being composed of two parts ($T_1$, $T_2$),

   - the first part ($T_1$) of the training sequence comprising at least one pulse whose energy is greater than the energy of a pulse carrying useful information and the number of slots separating the sending of two pulses being such that no interference is generated between the corresponding symbols;
   - the second part ($T_2$) of the training sequence comprising a set of pulses that are known in advance and are similar to those used to carry the useful information, the energy of each of these pulses being equivalent to the energy of a pulse carrying useful information and the number of slots separating the sending of two pulses being such that a great deal of interference is generated.

8. Terminal (D1) comprising a sending device as described in Claim 7.

9. Device (DR) for receiving pulses furnished with a probabilistic equalizer in a transmission channel with a sending device, which pulses representing information symbols and each of these pulses being associated with a slot in a symbol time, **characterized in that** it comprises:

   - means for receiving a training sequence composed of two parts ($T_1$, $T_2$),

      • the first part ($T_1$) of the training sequence comprising at least one pulse whose energy is greater than the energy of a pulse carrying useful information and the number of slots separating the sending of two pulses being such that no interference is generated between the corresponding symbols,
      • the second part ($T_2$) of the training sequence comprising a set of pulses that are known in advance and are similar to those used to carry the useful information, the energy of each of these pulses being equivalent to the energy of a pulse carrying useful information and the number of slots separating the sending of two pulses being such that a great deal of interference is generated,
      said receiving means comprising:

         - an amplifier able to adjust an amplification gain as a function of the signal received, the first part being received with a low amplification gain and the second part with a high amplification gain,
         - means for synchronization with the sending device on receipt of the first part, the amplification gain being low,
         - means (BE) for estimating parameters of the transmission channel as a function of the training sequence and which are able to carry out a first estimation on receipt of the first part and a second estimation on receipt of the second part and on the basis of the first estimation.

10. Receiving device according to Claim 9, **characterized in that** means (BE) for estimating parameters of the transmission channel as a function of the training sequence are able to implement:

   - on receipt of the first part (T1), an estimation of a number of symbols that can interfere;
   - a first estimation of the energy coefficients on receipt of the first part;
   - a first estimation of an energy level of the noise of the transmission channel on receipt of the first part;
   - a second estimation of the energy coefficients on receipt of the second part and on the basis of the first estimation of the energy level of the noise;
   - a second estimation of an energy level of the noise of the transmission channel on the basis of the second estimation of the energy coefficients.

**11.** Terminal (D2) comprising a receiving device according to one of Claims 9 or 10.

**12.** Computer program comprising instructions for implementing the method according to any one of Claims 2 to 6 when the method is executed by a computer.

**Fig. 1**

**Fig. 2a**

**Fig. 2b**

e(t)

**Fig. 3a**

**Fig. 3b**

**Fig. 3c**

**Fig. 3d**

s(t)

**Fig. 3e**

```
┌─────────────────────────────┐
│   Réception d'une première partie  │ ⌐␣ F1
│   d'une séquence d'apprentissage   │
└─────────────────────────────┘
              │
              ▼
┌─────────────────────────────┐
│                             │ ⌐␣ F2
│       Synchronisation       │
└─────────────────────────────┘
              │
              ▼
┌─────────────────────────────┐
│         Estimation          │ ⌐␣ F3
│    d'un nombre de symboles   │
└─────────────────────────────┘
              │
              ▼
┌─────────────────────────────┐
│      Première estimation     │ ⌐␣ F4
│    de coefficients d'énergie │
└─────────────────────────────┘
              │
              ▼
┌─────────────────────────────┐
│  Réception d'une deuxième partie  │ ⌐␣ F5
│   d'une séquence d'apprentissage  │
└─────────────────────────────┘
              │
              ▼
┌─────────────────────────────┐
│   Première estimation du bruit   │ ⌐␣ F6
└─────────────────────────────┘
              │
              ▼
┌─────────────────────────────┐
│       Deuxième estimation        │ ⌐␣ F7
│    de coefficients d'énergie     │
└─────────────────────────────┘
              │
              ▼
┌─────────────────────────────┐
│   Deuxième estimation du bruit   │ ⌐␣ F8
└─────────────────────────────┘
```

**Fig. 4**

**Fig. 5**

**Fig. 6**

**Fig. 7**

**Fig. 8**

EP 2 368 328 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007060749 A

- EP 1455461 A

**Littérature non-brevet citée dans la description**

- **S. MEKKI et al.** Probabilistic equalizer for ultra-wideband energy détection. *IEEE 67th Vehicular Technology Conference (VTC),* Mai 2008, 1108-1112

- **MEKKI.** EM channel estimation in a low-cost uwb receiver based on energy detection. *IEEE International Symposium on Wireless Communication Systems 2008 (ISWCS 08),* 2008
- **DE J. FOERSTER.** Channel modeling sub-committee report final. *IEEE P802.15-02/368r5-SG3a, Tech. Rep.,* 18 Novembre 2002